# FASCICULE DE BREVET EUROPEEN

(11) **EP 4 252 104 B1**
(45) Date de publication et mention de la délivrance du brevet: **11.11.2026**
(21) Numéro de dépôt: 21819798.6
(22) Date de dépôt: 24.11.2021
(51) Int. Cl.: G06F 3/02

(54) **CLAVIER POUR LA SAISIE DE DONNÉES, DISPOSITIF DE SAISIE DE DONNÉES ASSOCIÉ**
TASTATUR FÜR DATENEINGABE UND ZUGEHÖRIGE DATENEINGABEVORRICHTUNG
KEYPAD FOR DATA INPUT AND ASSOCIATED DATA INPUT DEVICE

(30) Priorité: 25.11.2020 FR 2012144
(43) Date de publication de la demande: 04.10.2023
(73) Titulaire: Banks and Acquirers International Holding, 75015 Paris (FR)
(72) Inventeur: SOUBIRANE, Alain, 26500 BOURG-LES-VALENCE (FR); BLANC, Olivier, 26600 PONT DE L'ISERE (FR); BARNERON, Sylvain, 26500 BOURG-LES-VALENCE (FR)
(74) Mandataire: LLR
(86) Numéro de dépôt international: PCT/EP2021/082764
(87) Numéro de publication internationale: WO 2022/112293

(56) Documents cités:
- WO-A1-2015/126282
- US-A- 5 583 497
- US-A- 5 731 808

## Description

### Domaine technique

Le domaine de l'invention est celui des claviers pour dispositifs électroniques de saisie de données.

### Art antérieur

De nombreux dispositifs électroniques en libre-service, installés dans des lieux publics, souvent en extérieur, intègrent un clavier permettant à un utilisateur de saisir des données. C'est le cas notamment de nombreuses machines automatiques de vente (e.g. pompes de distribution de carburant dans une station-service, bornes d'achat de titres de transports, distributeurs divers, etc.), ou encore des distributeurs automatiques de billets (DAB/ATM) par exemple. Dans un cas courant, ce clavier est par exemple utilisé pour saisir un code confidentiel associé à une carte de paiement préalablement insérée dans le dispositif, afin de finaliser une transaction de paiement relative à l'achat d'un bien ou d'un service.

Ces dispositifs électroniques - qui peuvent donc être considérés également comme des dispositifs de saisie de données - sont le plus souvent destinés à être utilisés par une personne debout, ou éventuellement par un conducteur installé dans son véhicule, par la fenêtre ouverte du véhicule. Aussi le clavier de saisie de données est-il le plus souvent positionné dans un plan vertical ou sensiblement vertical, plus adapté pour ce type d'utilisation qu'un positionnement « à plat » (i.e. dans un plan horizontal ou sensiblement horizontal). Dans une telle configuration, toutes les touches du clavier sont donc disposées dans un même plan vertical ou sensiblement vertical.

Il est par ailleurs fréquent que le clavier soit également positionné au fond d'un renfoncement du dispositif de saisie de données. Une telle disposition est en effet avantageuse à plusieurs titres. D'une part elle permet de mieux assurer la confidentialité de la saisie, le renfoncement limitant les angles de vue sur le clavier et rendant ainsi plus difficile pour un tiers de voir les informations, potentiellement sensibles, qu'un utilisateur est en train de saisir sur le clavier. D'autre part elle offre une protection physique accrue du clavier, notamment contre les intempéries ou contre d'éventuels actes de vandalisme. Le clavier ainsi positionné au fond d'une cavité du dispositif de saisie de données est par exemple bien plus difficile à atteindre avec un projectile qu'un clavier qui affleurerait la face avant d'un tel dispositif.

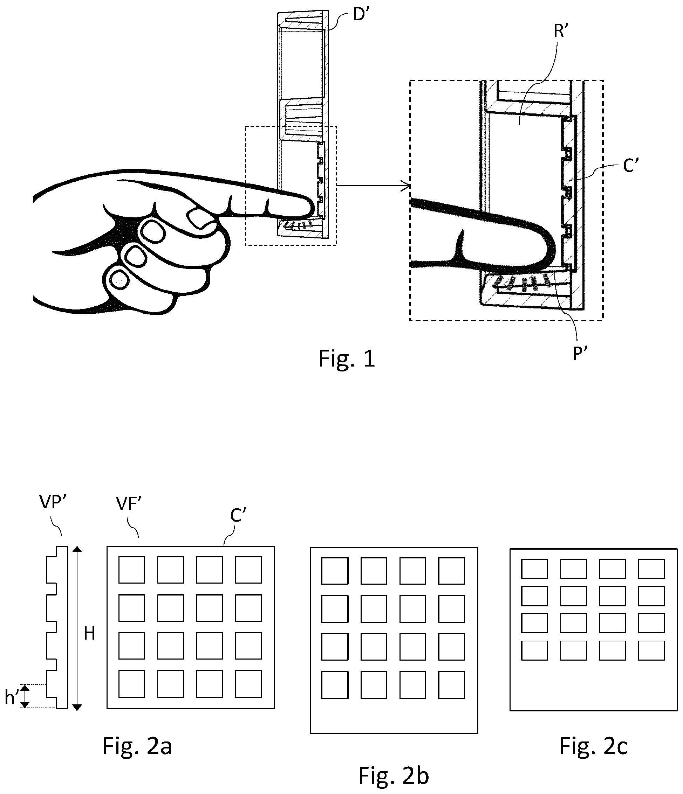

Cette disposition du clavier au fond d'un renfoncement n'offre cependant pas que des avantages. En particulier, elle complique souvent l'accès à certaines touches du clavier, et plus particulièrement aux touches présentes sur la rangée la plus basse du clavier. La figure 1 illustre bien cette problématique. Plus particulièrement, cette figure montre une vue de profil d'un dispositif de saisie de données D' (représenté seulement partiellement) de l'art antérieur, comprenant un clavier existant classique C' - tel que représenté seul sur la figure 2a, dans une vue de profil VP' et une vue de face VF' - positionné dans un plan vertical, au fond d'un renfoncement R' du dispositif D'. Comme illustré sur la figure 1, lorsque l'utilisateur souhaite presser une touche de la rangée basse du clavier C', la paroi inférieure P' du renfoncement R' peut s'avérer gênante et rendre l'opération malaisée. Le fait que cette difficulté à atteindre certaines touches du clavier concerne principalement les touches les plus basses du clavier est notamment dû à la morphologie de la main, et plus particulièrement à la morphologie d'un doigt : lorsque l'utilisateur cherche à atteindre une des touches de la rangée de touches inférieure du clavier, la partie la plus charnue de l'extrémité du doigt, i.e. la pulpe du doigt, se trouve en effet en vis-à-vis direct avec la paroi inférieure P' du renfoncement. Il est donc fréquent que la pulpe du doigt vienne heurter cette paroi inférieure du renfoncement. Pour remédier à ce problème, une solution consiste à adapter le clavier de manière à prévoir une zone libre de touches (i.e. une zone sans touches) dans la partie inférieure du clavier. Une telle solution peut être mise en œuvre de deux façons. Une première façon, illustrée en relation avec la figure 2b qui montre une vue de face d'un clavier correspondant à celui de la figure 2a mais intégrant la modification proposée, consiste à conserver la taille et la position des touches du clavier, mais à agrandir par le bas la taille du clavier. Toutefois, on sacrifie alors la compacité du clavier. Par ailleurs, il n'est pas toujours possible d'agrandir la taille du clavier, ses dimensions étant très souvent imposées, notamment lorsque le clavier est destiné à être monté encastré au sein d'un logement de taille bien définie prévu à cet effet dans le dispositif électronique de saisie de données (le fabricant du dispositif électronique n'étant pas toujours le même que celui du clavier). Une deuxième façon, illustrée en relation avec la figure 2c qui montre une vue de face d'un clavier correspondant à celui de la figure 2a mais intégrant l'autre modification proposée, consiste à conserver la taille du clavier mais à diminuer la taille des touches, afin d'être en mesure de les décaler vers une partie haute du clavier. Réduire ainsi la taille des touches rend cependant leur utilisation malaisée, et on étend alors un problème d'accessibilité qui ne touchait initialement que la rangée basse de touches du clavier à l'ensemble des touches du clavier.

Les claviers existants, représentés schématiquement et à la même échelle en relation avec les figures 2a, 2b et 2c, présentent donc tous des inconvénients.

L'état de la technique est décrit dans US 5 583 497 A, WO 2015/126282 A1 et US 5 731 808 A.

Il existe donc un besoin pour un clavier de conception différente, qui ne présente pas au moins certains des inconvénients précédemment présentés des claviers de l'art antérieur, notamment lorsque le clavier est amené à être installé au fond d'un renfoncement d'un dispositif électronique de saisie de données, dans une configuration sensiblement verticale.

### Résumé de l'invention

La présente technique permet de résoudre en partie les problèmes posés par l'art antérieur. La présente technique se rapporte en effet à un clavier pour la saisie de données, ledit clavier comprenant une pluralité de rangées de touches, chaque touche comprenant une surface d'appui. Selon la technique proposée, ladite pluralité de rangées de touches est divisée en au moins deux ensembles disjoints de rangées adjacentes de touches comprenant chacun au moins une rangée de touches, lesdits au moins deux ensembles disjoints comprenant au moins un premier ensemble comprenant au moins la rangée inférieure de ladite pluralité de rangées, et un deuxième ensemble comprenant au moins la rangée supérieure de ladite pluralité de rangées. Le clavier est par ailleurs conformé et dimensionné de manière à ce que :
- les surfaces d'appui des touches dudit premier ensemble soient sensiblement coplanaires, comprises dans un premier plan ;
- les surfaces d'appui des touches dudit deuxième ensemble soient sensiblement coplanaires, comprises dans un deuxième plan ; et en ce que
- ledit premier plan et ledit deuxième plan forment ensemble un angle strictement supérieur à 0° et strictement inférieur à 90°.

De cette manière, le clavier proposé présente des caractéristiques particulières lui permettant d'offrir une bonne accessibilité à toutes les touches de ce clavier, y compris celles situées sur la rangée la plus basse du clavier, notamment lorsque ce dernier est positionné dans une configuration sensiblement verticale au sein d'un renfoncement d'un dispositif de saisie de données.

Dans un mode de réalisation particulier, ladite pluralité de rangées de touches est divisée en exactement deux ensembles disjoints de rangées adjacentes de touches, constitués dudit premier ensemble et dudit deuxième ensemble.

De manière alternative, dans un autre mode de réalisation particulier, ladite pluralité de rangées de touches est divisée en au moins trois ensembles mutuellement disjoints de rangées adjacentes de touches, lesdits au moins trois ensembles mutuellement disjoints comprenant, en plus dudit premier ensemble et dudit deuxième ensemble, au moins un ensemble intermédiaire configuré de manière à ce que :
- les surfaces d'appui des touches comprises dans un même ensemble intermédiaire soient sensiblement coplanaires, comprises dans un même plan intermédiaire associé audit ensemble intermédiaire ;
- ledit plan intermédiaire forme avec ledit deuxième plan un angle, dit angle intermédiaire associé audit ensemble intermédiaire, strictement supérieur à 0° et strictement inférieur audit angle formé entre ledit premier plan et ledit deuxième plan.
- lorsque lesdits au moins trois ensembles mutuellement disjoints comprennent une pluralité d'ensembles intermédiaires, l'angle intermédiaire associé à un ensemble intermédiaire plus éloigné dudit deuxième ensemble est strictement supérieur à l'angle intermédiaire associé à un ensemble intermédiaire plus proche dudit deuxième ensemble.

Dans un mode de réalisation particulier, ledit premier plan et ledit deuxième plan forment ensemble un angle supérieur à 10° et strictement inférieur à 90°.

Dans un mode de réalisation particulier, ledit premier plan et ledit deuxième plan forment ensemble un angle compris entre 10° et 50°.

Dans un mode de réalisation particulier, ledit clavier comprend au moins trois rangées de touches, et ledit premier ensemble comprend au moins deux rangées de touches.

Dans un mode de réalisation particulier, ledit clavier comprend des moyens d'encastrement.

Selon un autre aspect, la technique proposée se rapporte également à un dispositif de saisie de données qui comprend :
- un renfoncement ;
- un clavier tel que précédemment décrit, disposé au fond dudit renfoncement de manière à ce que ledit deuxième plan soit sensiblement vertical.

Les différents modes de réalisation mentionnés ci-dessus sont combinables entre eux pour la mise en œuvre de l'invention.

### Figures

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés parmi lesquels :
[Fig 1], déjà décrite, montre une vue de profil d'un dispositif de saisie de données de l'art antérieur, et illustre les problèmes d'accessibilité aux touches basses d'un clavier de l'art antérieur lorsque ce clavier est positionné au fond d'un renfoncement du dispositif de saisie de données ;
[Fig 2a], déjà décrite, présente de manière schématique une vue de profil et une vue de face d'un clavier pour la saisie de données, tel qu'existant dans l'art antérieur ;
[Fig 2b], déjà décrite, illustre de manière schématique un autre clavier de saisie de données de l'art antérieur ;
[Fig 2c], déjà décrite, illustre de manière schématique encore un autre clavier de saisie de données de l'art antérieur ;
[Fig 3] présente de manière schématique une vue de profil et une vue de face d'un clavier de saisie de données, dans un mode de réalisation particulier de la technique proposée ;
[Fig 4a] présente de manière schématique une vue de profil et une vue de face d'un clavier de saisie de données, dans un autre mode de réalisation particulier de la technique proposée ;
[Fig 4b] illustre les relations entre les angles des plans associés aux différents ensembles de rangées de touches du clavier de saisie de données de la figure 4a, dans un mode de réalisation particulier de la technique proposée ;
[Fig 5] montre une vue de profil d'un dispositif de saisie de données comprenant un clavier selon la technique proposée, positionné au fond d'un renfoncement du dispositif, dans un mode de réalisation particulier.

### Description détaillée de l'invention

La présente technique se rapporte à un clavier pour la saisie de données. Plus particulièrement, comme cela est décrit par la suite en relation avec divers modes de réalisation, le clavier proposé présente des caractéristiques particulières lui permettant d'offrir une bonne accessibilité à toutes les touches de ce clavier, y compris celles situées sur la rangée la plus basse du clavier, même lorsque ce dernier est positionné au sein d'un renfoncement d'un dispositif de saisie de données, dans une configuration sensiblement verticale (le clavier étant par exemple positionné au sein d'un renfoncement aménagé dans la face avant d'un dispositif électronique de saisie de données tel qu'une machine automatique de vente). La technique proposée permet par ailleurs d'atteindre cet objectif sans compromis sur la taille des touches ou sur la compacité globale (à tout le moins en termes de hauteur et de largeur) du clavier.

Dans toute la description et dans les figures, les éléments de même nature sont identifiés par une même référence. Un clavier a de manière classique un sens d'utilisation (celui qui permet de lire, de manière naturelle et dans le bon sens, les caractères inscrits sur les touches du clavier). Lorsqu'ils sont utilisés pour décrire un clavier ou certaines parties de ce clavier, les termes « supérieur » versus « inférieur » et « haut » versus « bas » utilisés dans la description sont définis relativement à ce sens habituel d'utilisation du clavier. Lorsqu'ils sont utilisés pour décrire un dispositif électronique (tel qu'une machine automatique de vente par exemple) ou certaines parties d'un tel dispositif (un renfoncement au sein de ce dispositif notamment), les termes « supérieur » versus « inférieur » et « haut » versus « bas » utilisés dans la description sont définis relativement à la notion classique d'altitude (les éléments qualifiés de « supérieurs » ou de « hauts » ayant une altitude supérieure aux éléments qualifiés « d'inférieurs » ou de « bas »).

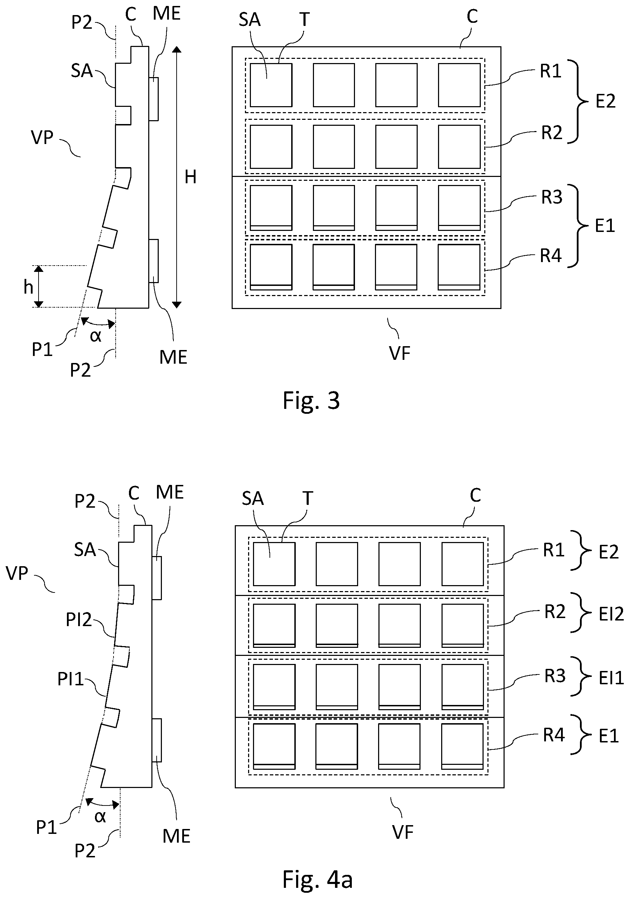

Un clavier selon la technique proposée est illustré en relation avec la figure 3, dans une vue de face VF et dans une vue de profil VP, dans un mode de réalisation particulier. Comme les claviers existants présentés en relation avec l'art antérieur, le clavier C comprend de manière classique une pluralité de rangées de touches (i.e. au moins deux rangées de touches). Dans le mode de réalisation particulier de la figure 3, le clavier comprend quatre rangées de touches (R1, R2, R3 et R4) comprenant chacune quatre touches, étant entendu qu'il s'agit là d'un exemple purement illustratif et non limitatif (tant en termes de nombre de rangées que de nombre de touches par rangées, qui peut différer d'une rangée à l'autre, une rangée de touches comprenant néanmoins toujours au moins une touche). Ces rangées de touches R1, R2, R3 et R4, sensiblement parallèles, sont disposées les unes au-dessus des autres. La pluralité de rangées de touches du clavier C comprend donc une rangée inférieure, qui correspond à la rangée de touches la plus basse du clavier (la rangée R4, dans l'exemple de la figure 3), et une rangée supérieure, qui correspond à la rangée de touches la plus haute du clavier (la rangée R1, dans l'exemple de la figure 3). Chaque touche T du clavier comprend une surface d'appui SA, sensiblement plane, qui est la partie destinée à être pressée par un utilisateur - classiquement avec l'extrémité d'un doigt - lors d'une utilisation de la touche.

Selon la technique proposée, la pluralité de rangées de touches (R1, R2, R3, R4) du clavier C est divisée en au moins deux ensembles disjoints de rangées adjacentes de touches, comprenant chacun au moins une rangée de touches. Par *« ensemble de rangées adjacentes de touches* », on entend un ensemble formé par une ou plusieurs rangées de touches du clavier, défini de telle sorte que lorsque ledit ensemble comprend plusieurs rangées de touches, chaque rangée de touches de l'ensemble - à l'exception de la rangée la plus basse de l'ensemble - est positionné immédiatement au-dessus d'une autre rangée de touches de l'ensemble. Selon la technique proposée, parmi les au moins deux ensembles disjoints de rangées adjacentes de touches formant le clavier C, on distingue au moins :
- un premier ensemble E1 comprenant au moins la rangée inférieure de la pluralité de rangées de touches du clavier C, i.e. la rangée la plus basse du clavier C ; et
- un deuxième ensemble E2 comprenant au moins la rangée supérieure de la pluralité de rangées de touches du clavier C, i.e. la rangée la plus haute du clavier C.

Selon le principe général de la technique proposée, et comme illustré sur la vue de profil VP de la figure 3, le clavier C est conformé et dimensionné de manière à ce que :
- les surfaces d'appui de toutes les touches du premier ensemble E1 de rangées adjacentes de touches soient sensiblement coplanaires, comprises dans un premier plan P1 ;
- les surfaces d'appui de toutes les touches du deuxième ensemble E2 de rangées adjacentes de touches soient sensiblement coplanaires, comprises dans un deuxième plan P2 ; et
- le premier plan P1 et le deuxième plan P2 soient sécants, et forment ensemble un angle α strictement supérieur à 0° et strictement inférieur à 90°.

Dans le mode de réalisation particulier illustré en figure 3, la pluralité de rangées de touches (R1, R2, R3, R4) du clavier C est divisée en exactement deux ensembles disjoints de rangées adjacentes de touches, correspondant au premier ensemble E1 et au deuxième ensemble E2. Dans ce cas, le deuxième ensemble E2 de rangées adjacentes de touches comprend toutes les rangées de touches du clavier qui ne font pas partie du premier ensemble E1 (en d'autres termes, l'ensemble E2 peut être considéré comme l'ensemble complémentaire de l'ensemble E1, vis-à-vis du clavier C). Dans l'exemple illustré en figure 3, le premier ensemble E1 est constitué des rangées de touches R3 et R4 (cet ensemble E1 comprend donc bien au moins la rangée de touches R4 la plus basse du clavier C), et le deuxième ensemble E2 est constitué des rangées de touches restantes R1 et R2 (cet ensemble E2 comprend donc bien au moins la rangée de touches R1 la plus haute du clavier C). Cet exemple est cependant purement illustratif : selon d'autres caractéristiques particulières de ce mode de réalisation particulier, le premier ensemble E1 pourrait par exemple être constitué uniquement de la rangée R4 et le deuxième ensemble E2 des rangées R1, R2 et R3 restantes, ou encore le premier ensemble E1 pourrait par exemple être constitué des rangées R2, R3 et R4 et le deuxième ensemble E2 uniquement de la rangée R1 restante.

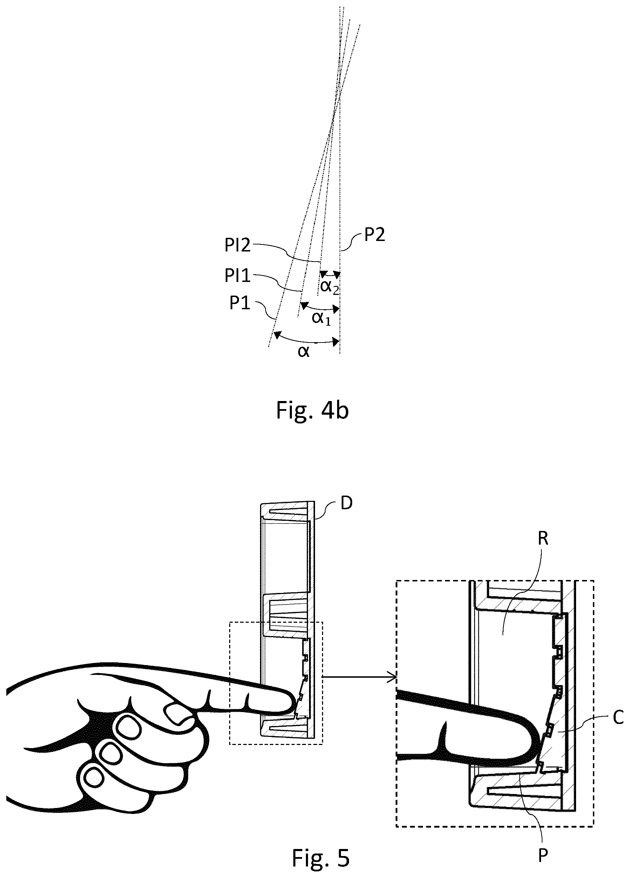

On présente maintenant, en relation avec les figures 4a et 4b, un autre mode de réalisation particulier de la technique proposée. Un clavier selon cet autre mode de réalisation particulier est illustré en relation avec la figure 4a, dans une vue de face VF et dans une vue de profil VP. Comme le clavier de la figure 3, ce clavier C comprend une pluralité de rangées de touches R1, R2, R3 et R4, sensiblement parallèles, disposées les unes au-dessus des autres, R1 correspondant à la rangée la plus haute du clavier C et R4 correspondant à la rangée la plus basse du clavier C. Toutefois, dans le mode de réalisation particulier représenté en figure 4a, la pluralité de rangées de touches du clavier est maintenant divisée en au moins trois ensembles mutuellement disjoints de rangées adjacentes de touches. En d'autres termes, en plus du premier ensemble E1 comprenant au moins la rangée inférieure R4 du clavier et du deuxième ensemble E2 comprenant au moins la rangée supérieure R1 du clavier, la pluralité de rangées de touches du clavier C comprend au moins un ensemble intermédiaire de rangées adjacentes de touches. Dans l'exemple illustré en figure 4a (non limitatif), le premier ensemble E1 est constitué de la rangée de touches R4 la plus basse du clavier, le deuxième ensemble E2 est constitué de la rangée de touche R1 la plus haute du clavier, un premier ensemble intermédiaire El1 est constitué de la rangée de touche R3 située immédiatement au-dessus de la rangé R4, et un deuxième ensemble intermédiaire EI2 est constitué de la rangée de touche R2 située immédiatement au-dessous de la rangée R1. Cet exemple est cependant purement illustratif : dans une autre implémentation de ce mode de réalisation, un unique ensemble intermédiaire constitué des rangées R2 et R3 pourrait par exemple être défini, au lieu des deux ensembles intermédiaires EI1 et EI2 précédemment décrits. Les quatre ensembles E1, El1, EI2 et E2 sont mutuellement disjoints (chaque touche du clavier C étant comprise dans un seul de ces ensemble). Selon ce mode de réalisation particulier, et comme illustré sur la vue de profil VP de la figure 4a et sur la vue correspondante de la figure 4b (figure simplifiée afin de ne pas surcharger la figure 4a, montrant uniquement les différents plans associés aux différents ensembles de rangées de touches représentés sur la vue de profil VP de la figure 4a, prolongés et de profil, ainsi que les relations angulaires entre ces plans), le clavier C est cependant conformé et dimensionné de manière à ce que les différents ensembles intermédiaires présentent des caractéristiques bien définies, présentées ci-après.

En premier lieu, les surfaces d'appui de toutes les touches d'un même ensemble intermédiaire sont sensiblement coplanaires, comprises dans un plan appelé plan intermédiaire associé à l'ensemble intermédiaire considéré. Ainsi, dans l'exemple illustré en relation avec la figure 4a, les surfaces d'appui de toutes les touches de l'ensemble intermédiaire El1 sont comprises un même plan intermédiaire PI1, et les surfaces d'appui de toutes les touches de l'ensemble intermédiaire EI2 sont comprises un même plan intermédiaire PI2.

En deuxième lieu, un plan intermédiaire associé à un ensemble intermédiaire forme avec le deuxième plan P2 un angle - appelé angle intermédiaire associé audit ensemble intermédiaire - strictement supérieur à 0° et strictement inférieur à l'angle α formé entre le premier plan P1 et le deuxième plan P2. Ainsi, dans l'exemple illustré en relation avec la figure 4a, et comme visible sur la figure simplifiée 4b :
- le plan intermédiaire PI1 et le deuxième plan P2 sont sécants et forment ensemble un angle α₁ strictement supérieur à 0° et strictement inférieur à l'angle α ;
- le plan intermédiaire PI2 et le deuxième plan P2 sont sécants et forment ensemble un angle α₂ strictement supérieur à 0° et strictement inférieur à l'angle α.

En troisième lieu, lorsque plusieurs ensembles intermédiaires sont définis, l'angle intermédiaire associé à un ensemble intermédiaire plus éloigné du deuxième ensemble E2 est strictement supérieur à l'angle intermédiaire associé à un ensemble intermédiaire plus proche du deuxième ensemble E2 (en termes de distance sur le clavier). Ainsi, dans l'exemple illustré en relation avec la figure 4a, et comme visible sur la figure simplifiée 4b, l'angle α₁ associé à l'ensemble intermédiaire El1 est strictement supérieur à l'angle α₂ associé à l'ensemble intermédiaire EI2, car l'ensemble intermédiaire El1 est plus éloigné sur le clavier C de l'ensemble E2 (comprenant la rangée R1 la plus haute du clavier) que l'ensemble intermédiaire EI2.

Dans le cas de l'exemple illustré en relation avec les figures 4a et 4b, en synthétisant les caractéristiques précédemment présentées, on a donc les relations angulaires suivantes : 0 < α₂ < α₁ < α.

Ces différentes caractéristiques complémentaires des ensembles intermédiaires permettent d'assurer une progressivité de l'inclinaison des différents ensembles de rangées de touches, à mesure que l'on s'éloigne de l'ensemble comprenant la rangée de touches la plus haute du clavier. On atténue ainsi l'effet de « cassure » du clavier qui est observé quand toutes les rangées de touches du clavier sont réparties uniquement entre deux ensembles disjoints complémentaires, un premier ensemble comprenant la rangée de touches la plus basse du clavier et un deuxième ensemble comprenant la rangée de touche la plus haute du clavier (comme cela est clairement visible lorsqu'on compare la vue de profil de la figure 4a avec la vue de profil de la figure 3). En multipliant le nombre d'ensembles intermédiaires (lorsque le nombre de rangées de touches du clavier le permet), le clavier peut ainsi être configuré de telle sorte que les rangées de touches évoluent quasiment le long d'une courbe (avec un profil qui peut être qualifié de profil « en virgule »), du haut vers le bas du clavier.

Dans un mode de réalisation particulier, le clavier C est destiné à être encastré dans un logement prévu à cet effet au sein d'un dispositif de saisie de données, et il comprend à cet effet des moyens d'encastrement ME (par exemple des pattes de fixation par clipsage).

La technique proposée se rapporte également, selon un autre aspect, à un dispositif de saisie de données. Un tel dispositif D est partiellement représenté en relation avec la figure 5, dans une vue de profil, dans un mode de réalisation particulier. Le dispositif D comprend un renfoncement R, au fond duquel est positionné un clavier C selon la présente technique (en d'autres termes, le clavier C forme le fond du renfoncement R). Le clavier C est plus particulièrement positionné de manière à ce que le plan P2 soit vertical, ou sensiblement vertical (on désigne sous le terme de « positionnement en configuration verticale » cette manière de positionner le clavier de la technique proposée, dans le reste du document). Les avantages déjà présentés en relation avec l'art antérieur d'un positionnement du clavier au fond du renfoncement R du dispositif de saisie de données restent obtenus : le clavier C est physiquement mieux protégé (contre d'éventuels actes de vandalisme, contre les intempéries, etc.), et la saisie de données sur le clavier est rendue plus confidentielle (les angles de vues sur le clavier étant réduits). Les inconvénients des dispositifs existants de saisies de données comprenant un clavier classique positionné dans un renfoncement - tels que présentés en relation avec la figure 1 de l'art antérieur - sont toutefois surmontés lorsque c'est un clavier selon la technique proposée (e.g. un clavier selon la figure 3 ou selon la figure 4a) qui est positionné dans le renfoncement R en lieu et place d'un clavier classique (e.g. le clavier selon la figure 2a). En effet, comme illustré sur la figure 5, l'utilisation dans ce contexte d'un clavier selon la technique proposée améliore sensiblement l'accessibilité aux touches basses du clavier C, et plus particulièrement, à celles de sa rangée inférieure. Plus particulièrement, la paroi inférieure P du renfoncement R ne vient plus gêner l'utilisation de ces touches. Cet effet est obtenu grâce à l'inclinaison de la surface d'appui des touches des rangées basses du clavier (celles du premier ensemble E1, qui comprend au moins la rangée la plus basse du clavier), qui ne sont plus dans le plan vertical des autres touches (celles du deuxième ensemble E2) lorsque le clavier C est ainsi positionné. Une telle inclinaison offre en effet plusieurs avantages. En premier lieu, à dimensions de clavier équivalentes (hauteur H de la figure 2a pour un clavier C' de l'art antérieur et hauteur H de la figure 3 pour un clavier C selon la technique proposée) et à surface d'appui de touches équivalente (touches de mêmes dimensions pour le clavier C' de l'art antérieur et le clavier C selon la technique proposée), cette inclinaison permet de disposer d'une surface disponible accrue pour le positionnement des touches des rangées basses du clavier (celles de du premier ensemble E1). Il est donc possible de décaler ces touches vers le haut du clavier sans avoir besoin d'en réduire les dimensions, de manière à ce que le centre des touches de la rangée inférieure du clavier C soit situé à une distance h de la paroi basse P du renfoncement R supérieure à la distance h' qui séparerait le centre de ces touches de cette paroi, si un clavier C' de l'art antérieur (dans lequel toutes les touches sont dans un même plan vertical) était installé dans le même renfoncement R. En deuxième lieu, du fait de cette inclinaison, les touches basses du clavier C (celles du premier ensemble E1 de rangées adjacentes de touches) sont situées à une profondeur moindre du renfoncement R, par rapport aux touches du deuxième ensemble E2, ce qui les rend encore plus accessibles. En troisième lieu, la présence de cette inclinaison fait que l'utilisateur est naturellement enclin ou incité, sans qu'il s'en rende nécessairement compte, à relever l'axe du doigt utilisé pour presser ces touches basses et inclinées du clavier, afin d'exercer une pression sensiblement normale à la surface d'appui de la touche. Ceci réduit encore le risque que la pulpe de son doigt vienne heurter la paroi inférieure P du renfoncement R.

Dans divers modes de réalisation particuliers, certaines caractéristiques du clavier selon la technique proposée - telles que la valeur de l'angle α formé entre le premier plan P1 et le deuxième plan P2 et/ou le nombre de rangées de touches comprises dans le premier ensemble E1- peuvent être ajustées pour s'adapter à différents contextes d'utilisation une fois le clavier positionné au fond d'un renfoncement d'un dispositif de saisie de données.

Ainsi, dans un mode de réalisation particulier, le premier plan P1 et le deuxième plan P2 forment ensemble un angle supérieur à 10° et strictement inférieur à 90°. De cette manière, l'inclinaison par rapport au plan vertical est suffisante pour permettre d'offrir, à dimensions de clavier constante (et en particulier à hauteur H de clavier constante), une surface disponible plus importante permettant de décaler de manière plus importante les rangées de touches du premier ensemble E1 vers le haut du clavier, les éloignant ainsi encore de la paroi basse du renfoncement d'un dispositif de saisie de données selon la technique proposée, une fois le clavier positionné dans ce renfoncement.

Selon une caractéristique particulière, le premier plan P1 et le deuxième plan P2 forment ensemble un angle compris entre 10° et 50°. De cette manière, l'inclinaison des touches du premier ensemble E1 reste par ailleurs suffisamment éloignée de l'horizontale, de manière à conserver une bonne visibilité de ces touches une fois le clavier positionné dans le renfoncement du dispositif de saisie de données selon la technique proposée.

Dans un mode de réalisation particulier, le clavier comprend au moins trois rangées de touches et le premier ensemble E1 comprend au moins deux rangées de touches. À inclinaison constante (angle α entre le premier plan P1 et le deuxième plan P2 constant) et à dimensions de clavier constantes (en particulier à hauteur H de clavier constante), le fait d'augmenter le nombre de touches dans le premier ensemble E1 permet en effet de réduire la profondeur à laquelle se trouve la rangée de touches la plus basse du clavier dans le renfoncement, une fois le clavier positionné dans un dispositif de saisie de données selon la technique proposée. Avec cette profondeur réduite, l'accessibilité à ces touches de la rangée la plus basse du clavier est ainsi encore améliorée.

Il convient de noter que, bien que présenté majoritairement dans ce contexte d'utilisation dans les différents modes de réalisations décrits, le clavier selon la technique proposée ne se limite pas uniquement à une utilisation au sein d'un renfoncement d'un dispositif électronique de saisie de données. En particulier, le clavier de la présente technique est par exemple adapté pour être également utilisé dans un dispositif de saisie de données dans lequel le clavier est amené à être positionné en configuration verticale sur un support horizontal qui s'étend vers l'avant du clavier, et dans lequel la présence d'un tel support serait donc susceptible de gêner l'accessibilité aux touches basses d'un clavier classique de l'art antérieur.

## Revendications

1. Dispositif de saisie de données comprenant :
- un clavier (C) pour la saisie de données, ledit clavier comprenant une pluralité de rangées (R1, R2, R3, R4) de touches, chaque touche (T) comprenant une surface d'appui (SA), ladite pluralité de rangées de touches étant divisée en au moins deux ensembles disjoints de rangées adjacentes de touches comprenant chacun au moins une rangée de touches, lesdits au moins deux ensembles disjoints comprenant au moins un premier ensemble (E1) comprenant au moins la rangée inférieure (R4) de ladite pluralité de rangées, et un deuxième ensemble (E2) comprenant au moins la rangée supérieure (R1) de ladite pluralité de rangées ;
les surfaces d'appui des touches dudit premier ensemble (E1) étant sensiblement coplanaires, comprises dans un premier plan (P1) ;
les surfaces d'appui des touches dudit deuxième ensemble (E2) sont sensiblement coplanaires, comprises dans un deuxième plan (P2) ;
ledit dispositif étant **caractérisé en ce que** :
- le clavier est disposé au fond d'un renfoncement (R) aménagé dans une face avant dudit dispositif ;
- le clavier est positionné dans une configuration sensiblement verticale ;
- ledit deuxième plan (P2) est sensiblement vertical ;
- ledit premier plan (P1) et ledit deuxième plan (P2) forment ensemble un angle (α) strictement supérieur à 0° et strictement inférieur à 90°.

2. Dispositif de saisie de données selon la revendication 1, **caractérisé en ce que** ladite pluralité de rangées de touches est divisée en exactement deux ensembles disjoints de rangées adjacentes de touches, constitués dudit premier ensemble (E1) et dudit deuxième ensemble (E2).

3. Dispositif de saisie de données selon la revendication 1, **caractérisé en ce que** ladite pluralité de rangées de touches est divisée en au moins trois ensembles mutuellement disjoints de rangées adjacentes de touches, lesdits au moins trois ensembles mutuellement disjoints comprenant, en plus dudit premier ensemble (E1) et dudit deuxième ensemble (E2), au moins un ensemble intermédiaire (El1, EI2) configuré de manière à ce que :
- les surfaces d'appui des touches comprises dans un même ensemble intermédiaire sont sensiblement coplanaires, comprises dans un plan intermédiaire (PI1, PI2) ;
- ledit plan intermédiaire forme avec le deuxième plan (P2) un angle, dit angle intermédiaire associé audit ensemble intermédiaire, strictement supérieur à 0° et strictement inférieur audit angle (α) formé entre ledit premier plan (P1) et ledit deuxième plan (P2) ;
- lorsque lesdits au moins trois ensembles mutuellement disjoints comprennent une pluralité d'ensembles intermédiaires, l'angle intermédiaire associé à un ensemble intermédiaire (EI1) plus éloigné dudit deuxième ensemble (E2) est strictement supérieur à l'angle intermédiaire associé à un ensemble intermédiaire (EI2) plus proche dudit deuxième ensemble (E2).

4. Dispositif de saisie de données selon l'une quelconque des revendications précédentes, **caractérisé en ce que** ledit premier plan et ledit deuxième plan forment ensemble un angle supérieur à 10° et strictement inférieur à 90°.

5. Dispositif de saisie de données selon l'une quelconque des revendications précédentes, **caractérisé en ce que** ledit premier plan et ledit deuxième plan forment ensemble un angle compris entre 10° et 50°.

6. Dispositif de saisie de données selon l'une quelconque des revendications précédentes, **caractérisé en ce que** ledit clavier comprend au moins trois rangées de touches, et **en ce que** ledit premier ensemble comprend au moins deux rangées de touches.

7. Dispositif de saisie de données selon l'une quelconque des revendications précédentes, **caractérisé en ce que** ledit clavier comprend des moyens d'encastrement (ME).

## Patentansprüche

1. Dateneingabevorrichtung umfassend:
- eine Tastatur (C) zur Dateneingabe, wobei die Tastatur eine Mehrzahl von Reihen (R1, R2, R3, R4) von Tasten umfasst, wobei jede Taste (T) eine Auflagefläche (SA) umfasst, wobei die Mehrzahl von Tastenreihen unterteilt ist in mindestens zwei disjunkte Anordnungen benachbarter Tastenreihen, die jeweils mindestens eine Tastenreihe umfassen, wobei die mindestens zwei disjunkten Anordnungen umfassen: mindestens eine erste Anordnung (E1), die mindestens die untere Reihe (R4) der Mehrzahl von Reihen umfasst, und eine zweite Anordnung (E2), die mindestens die obere Reihe (R1) der Mehrzahl von Reihen umfasst;
wobei die Auflageflächen der Tasten der ersten Anordnung (E1) im Wesentlichen koplanar sind und in einer ersten Ebene (P1) liegen;
wobei die Auflageflächen der Tasten der zweiten Anordnung (E2) im Wesentlichen koplanar sind und in einer zweiten Ebene (P2) liegen, wobei die Vorrichtung **dadurch gekennzeichnet ist, dass**:
- die Tastatur am Boden einer Einbuchtung (R) angeordnet ist, die in einer vorderen Fläche der Vorrichtung vorgesehen ist;
- die Tastatur in einer im Wesentlichen vertikalen Konfiguration positioniert ist; die zweite Ebene (P2) im Wesentlichen vertikal ist;
- die erste Ebene (P1) und die zweite Ebene (P2) gemeinsam einen Winkel (α) bilden, der streng größer als 0° und streng kleiner als 90° ist.

2. Dateneingabevorrichtung nach Anspruch 1, **dadurch gekennzeichnet, dass** die Mehrzahl von Tastenreihen unterteilt ist in exakt zwei disjunkte Anordnungen benachbarter Tastenreihen, die von der ersten Anordnung (E1) und der zweiten Anordnung (E2) gebildet sind.

3. Dateneingabevorrichtung nach Anspruch 1, **dadurch gekennzeichnet, dass** die Mehrzahl von Tastenreihen unterteilt ist in mindestens drei paarweise disjunkte Anordnungen von benachbarten Tastenreihen, wobei die mindestens drei paarweise disjunkten Anordnungen, zusätzlich zu der ersten Anordnung (E1) und der zweiten Anordnung (E2), mindestens eine Zwischenanordnung (El1, EI2) umfassen, die derart ausgebildet ist, dass:
- die Auflageflächen der Tasten, die in einer gleichen Zwischenanordnung enthalten sind, im Wesentlichen koplanar sind und in einer Zwischenebene (PI1, PI2) liegen;
- die Zwischenebene mit der zweiten Ebene (P2) einen Winkel, so genannten Zwischenwinkel, bildet, der der Zwischenanordnung zugeordnet ist und streng größer als 0° und streng kleiner als der Winkel (α) ist, der zwischen der ersten Ebene (P1) und der zweiten Ebene (P2) gebildet ist;
- wenn die mindestens drei paarweise disjunkten Anordnungen eine Mehrzahl von Zwischenanordnungen umfassen, der Zwischenwinkel, der einer Zwischenanordnung (El1) zugeordnet ist, die von der zweiten Ebene (E2) weiter entfernt ist, streng größer ist als der Zwischenwinkel, der einer Zwischenanordnung (El2) zugeordnet ist, die der zweiten Ebene (E2) näher liegt.

4. Dateneingabevorrichtung nach einem der vorhergehenden Ansprüche, **dadurch gekennzeichnet, dass** die erste Ebene und die zweite Ebene gemeinsam einen Winkel (α) bilden, der streng größer als 10° und strenger kleiner als 90° ist.

5. Dateneingabevorrichtung nach einem der vorhergehenden Ansprüche, **dadurch gekennzeichnet, dass** die erste Ebene und die zweite Ebene gemeinsam einen Winkel zwischen 10° und 50° bilden.

6. Dateneingabevorrichtung nach einem der vorhergehenden Ansprüche, **dadurch gekennzeichnet, dass** die Tastatur mindestens drei Tastenreihen umfasst, und dadurch, dass die erste Anordnung mindestens zwei Tastenreihen umfasst.

7. Dateneingabevorrichtung nach einem der vorhergehenden Ansprüche, **dadurch gekennzeichnet, dass** die Tastatur Einbaumittel (ME) umfasst.

## Claims

1. Data input device comprising:
- a keyboard (C) for entering data, said keyboard comprising a plurality of rows (R1, R2, R3, R4) of keys, each key (T) comprising a support surface (SA), said plurality of rows of keys being divided into at least two disjoint sets of adjacent rows of keys, each comprising at least one row of keys, said at least two disjoint sets comprising at least a first set (E1) comprising at least the bottom row (R4) of said plurality of rows, and a second set (E2) comprising at least the top row (R1) of said plurality of rows;
the key support surfaces of said first set (E1) are substantially coplanar, lying within a first plane (P1);
the key support surfaces of said second set (E2) are substantially coplanar, lying within a second plane (P2);
said device being **characterized in that**:
- the keyboard is arranged at the bottom of a recess (R) formed in a front face of said device;
- the keyboard is positioned in a substantially vertical configuration;
- said second plane (P2) is substantially vertical;
- said first plane (P1) and said second plane (P2) together form an angle (α) strictly greater than 0° and strictly less than 90°.

2. Data input device according to claim 1, **characterized in that** said plurality of rows of keys is divided into exactly two disjoint sets of adjacent rows of keys, constituted by said first set (E1) and said second set (E2).

3. Data input device according to claim 1, **characterized in that** said plurality of rows of keys is divided into at least three mutually disjoint sets of adjacent rows of keys, said at least three mutually disjoint sets comprising, in addition to said first set (E1) and said second set (E2), at least one intermediate set (EI1, EI2) configured such that:
- the key support surfaces included in a same intermediate set are substantially coplanar, lying in an intermediate plane (PI1, PI2);
- said intermediate plane forms an angle with the second plane (P2), referred to as the intermediate angle associated with said intermediate set, that is strictly greater than 0° and strictly less than said angle (α) formed between said first plane (P1) and said second plane (P2);
- when said at least three mutually disjoint sets comprise a plurality of intermediate sets, the intermediate angle associated with an intermediate set (EI1) farther from said second set (E2) is strictly greater than the intermediate angle associated with an intermediate set (EI2) closer to said second set (E2).

4. Data input device according to any one of the preceding claims, **characterized in that** said first plane and said second plane together form an angle greater than 10° and strictly less than 90°.

5. Data input device according to any one of the preceding claims, **characterized in that** said first plane and said second plane together form an angle of between 10° and 50°.

6. Data input device according to any one of the preceding claims, **characterized in that** said keyboard comprises at least three rows of keys, and **in that** said first set comprises at least two rows of keys.

7. Data input device according to any one of the preceding claims, **characterized in that** said keyboard comprises embedding means (ME).
